# EUROPEAN PATENT SPECIFICATION

(11) **EP 2 504 612 B1**
(45) Date of publication and mention of the grant of the patent: **27.04.2016**
(21) Application number: 10782153.0
(22) Date of filing: 18.11.2010
(51) Int. Cl.: F16L 15/00

(54) **HYBRID TUBE CONNECTOR PORT**
VERBINDUNGSANSCHLUSS FÜR RÖHRE
PORT DE CONNEXION POUR TUYAUX

(30) Priority: 24.11.2009 US 592397
(43) Date of publication of application: 03.10.2012
(73) Proprietor: Gates Corporation, Denver, CO 80202 (US)
(72) Inventor: SWIFT, Jonathan, C., Cambridge Cambridgeshire CB4 3PJ (GB); GRAY, Charles, Gray, Parker, CO 80134 (US); LEASURE, Randall, Mark, Monument, CO 80134 (US); MILLER, Kevin, J., Bismarck, ND 58503 (US)
(74) Representative: Tunstall, Christopher Stephen
(86) International application number: PCT/US2010/057147
(87) International publication number: WO 2011/066159

(56) References cited:
- EP-A1- 0 691 505
- WO-A2-2007/127772
- DE-A1-102005 004 030
- GB-A- 880 282
- GB-A- 894 181
- JP-A- 9 105 484
- US-A- 3 145 035
- US-A- 3 151 893
- US-A- 3 284 047
- US-A- 5 000 490
- US-A- 5 848 813
- US-A1- 2005 242 582
- US-A1- 2008 048 440

## Description

### Field of the Invention

The invention relates to a hybrid tube connector port, and more particularly, to a hybrid tube connector port comprising a first and second tapered surface for engaging different types of tube connectors.

### Background of the Invention

Generally, for the purpose of forming a tube joint or hose coupling, a male portion engages a port. The shape of the male portion and cooperating port are designed to allow ease of connection while providing a suitable pressure seal.

Various joints and coupling are known, however, in each instance a particular male connector will only mate with the appropriate corresponding same style port. In other words, mixing connector styles is not possible since one style is not interchangeable with another, which limits system flexibility. Hence, it is not possible to use an SAE MALE BOSS connector with a SAE 37 DEGREE port.

It is known that standard SAE male boss fittings are susceptible to leakage after pressure, temperature and vibration excursions. This can cause equipment manufacturers to either over torque SAE male boss fittings (potentially resulting in stripped threads) or to use more costly longer threads (SAE male boss heavy) particularly when ports are machined into aluminum.

It is also known that male boss swivel port fittings (SAE reference) are prone to leakage and damage after pressure, temperature and vibration excursions. These issues can be accentuated by the designs of these fittings which comprise of a threaded male stud with an o-ring followed by a clinched washer followed by a second thread and lock nut. The weak element is the washer clinching process, if this is not done accurately gaps behind the o-ring can exist which lead to o-ring extrusion further shortening life of the fitting.

Representative of the art is US patent 5,516,157 which discloses an improved hydraulic coupling which forms contact seals to fluidly connect a tapered port with a tube having a threaded connecting portion. The contact seals may be metal-to-metal seals, or alternatively may include a resin polymer element. For connecting a tube directly in the port, one embodiment of the invention includes an outwardly extending lip on an expanded portion of the tube and a tube nut rim wherein the tube nut engages the expanded portion and by tightening the tube nut, the tube lip deforms on the tapered port and the tube nut rim deforms on both the tapered port and the tube. Optionally, o-rings may be added to provide additional seals. The coupling may be designed not to seal without the application of tool generated torques.

Document GB 880,282 A discloses a tube connector port comprising: a bore having a diameter and a centerline; first and second tapered surfaces, the first tapered surface being disposed immediately proximate to the bore; and a threaded inner surface disposed axially between the first tapered surface and the second tapered surface.

Document EP 0 691 505 A1 discloses: a tube connector port comprising: a bore having a diameter and a centerline; a tapered surface; an arcuate surface; and a threaded inner surface disposed axially between the arcuate sealing surface and the tapered surface.

What is needed is a hybrid tube connector port comprising a first and second tapered surface for engaging different types of tube connectors. The present invention meets this need with a hybrid tube connector port according to claim 1 or claim 5.

### Summary of the Invention

The primary aspect of the invention is to provide a hybrid tube connector port comprising a first and second tapered surface for engaging different types of tube connectors.

Other aspects of the invention will be pointed out or made obvious by the following description of the invention and the accompanying drawings.

The invention comprises a hybrid tube connector port as recited in the claims.

### Brief Description of the Drawings

The accompanying drawings, which are incorporated in and form a part of the specification, illustrate preferred embodiments of the present invention, and together with a description, serve to explain the principles of the invention.
Fig. 1(A) and Fig. 1(B) show the prior art.
Fig. 2(A) is a cross-sectional view of the inventive hybrid port.
Fig.2(B) is a cross-sectional view of an alternate hybrid port not according to the present invention.
Fig. 2C is cross-sectional view of a hybrid port.
Fig. 2D a split cross-sectional view of a compact hybrid port with shorter threads.
Fig. 3 is a cross-sectional view of the port in Fig. 2A with an MJX tube attached.
Fig. 4A is a cross-sectional view of the port in Fig. 2A with the SAE male boss heavy duty attached.
Fig. 4B is a cross-sectional view of the port in Fig. 2A with the SAE male boss light duty.
Fig. 5 is a cross-sectional view of the port in Fig. 2D with a male SAE 45 fitting attached.
Fig. 6 is a cross-sectional view of a straight tubular coupling assembly engaged with the hybrid port.
Fig. 7 is a cross-sectional view of a bent tube assembly engaged with the hybrid port.
Fig. 8 is a cross-sectional view of a straight coupling assembly engaged with the hybrid port.
Fig. 9 is a cross-sectional view of the port in Fig. 2A with an MJX tube attached. Fig. 10 is a cross-sectional view of the port in Fig. 2A with the SAE male boss light duty.

### Detailed Description of the Preferred Embodiment

The inventive hybrid port allows different components to be used in a system.

In particular, a user is afforded flexibility in selecting components wherein for example a given style, for example, SAE MALE BOSS or SAE 37 DEGREE can each be connected to the hybrid port.

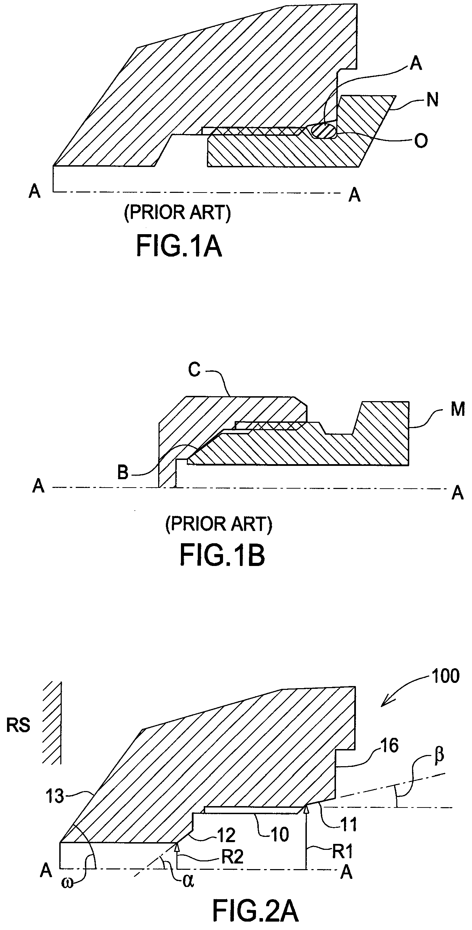

Fig. 1(A) and Fig. 1(B) each show the prior art. Figure 1(A) shows a male boss (SAE MALE BOSS) standard port connector. A tapered surface A compresses an o-ring O against a nut N. Figure 1(B) shows a cap C engaged with an SAE 37 Degree male connector

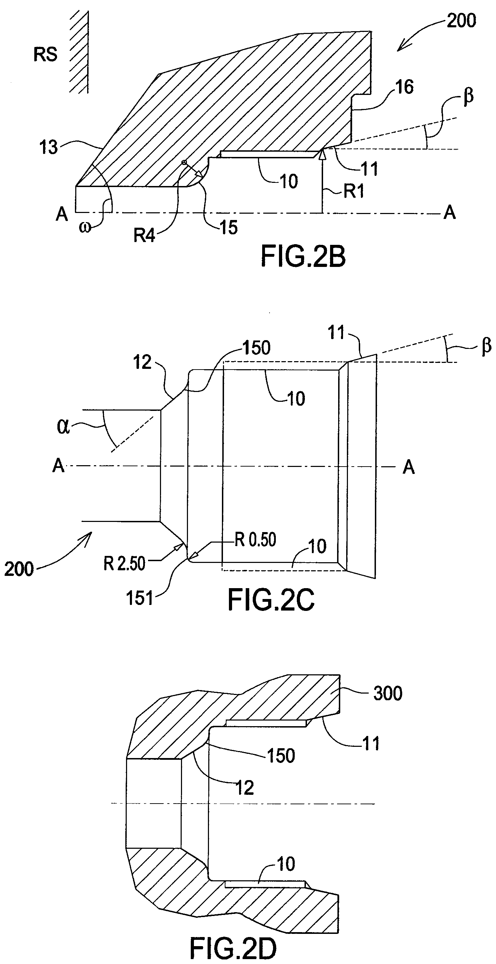

Each of Figures 2A and 2B depict an upper half of the hybrid port with respect to an axis A-A, the lower half being identical to the upper half as shown and therefore, the lower half is omitted.

Fig. 2(A) is a cross-sectional view of the inventive hybrid port. A male SAE 37 DEGREE component (not shown) will have a cone to seal engagement with surface 12.

The hybrid port comprises a threaded inner surface 10. Threaded surface 10 provides for a threaded engagement with any threaded tubing connector as decribed herein.

A tapered surface 11 comprises a cone angle β of 12°. Surface 11 is engagable with a male boss (SAE MALE BOSS) connector o-ring (not shown). The o-ring is known in the art.

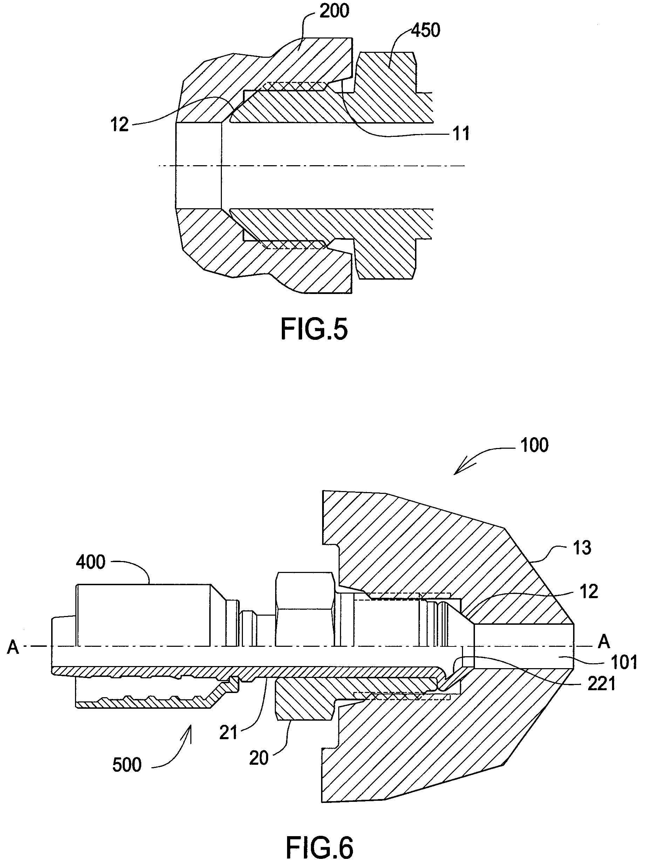

A tapered surface 12 comprises a cone angle α of 36.5° up to 40°. The preferred angle is 37°. Surface 12 is engagable with an MJX tube cone (see Fig. 6). Surface 12 is immediately proximate to bore 101. Cone angle α may also comprise 45° so that the connector can interface with a SAE 45 DEGREE Male fitting (not shown).

The radius R1 to surface 11 is greater than radius R2 to surface 12. No portion of surface 12 has a radius which exceeds a radius of surface 11. Radius R2 is one half the diameter of bore 101, see Fig. 6.

Threaded surface 10 is disposed axially with respect to longitudinal axis A-A between surface 11 and surface 12.

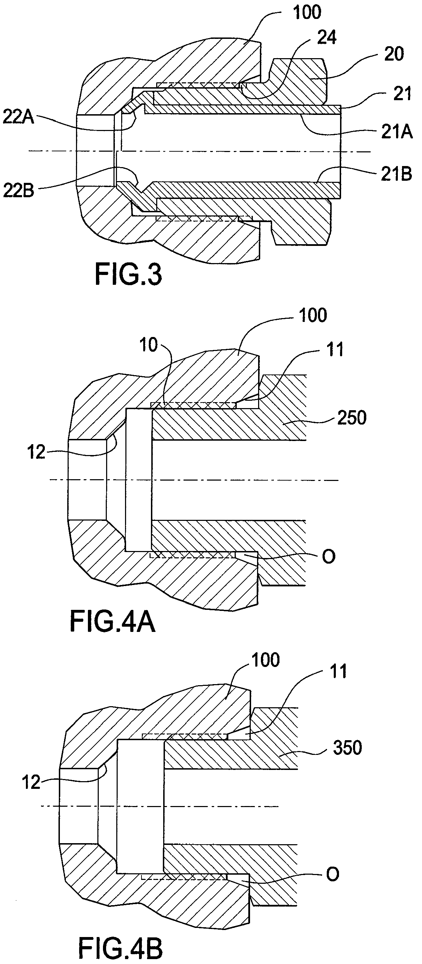

A tapered surface 13 comprises a cone angle ω of approximately 60°, although any angle that would be suitable for a fillet weld is sufficient, for example between 30° and 60°. Surface 13 provides a weldment by which the hybrid port is welded to a receiving surface (RS), see Fig. 3. Weldment surface 13 is known in the art.

In an alternate embodiment the hybrid port is machined directly into the equipment instead of being welded, or is threaded into the equipment by threads on an outer surface.

Fig. 2(B) is a corss-sectional view of an alternate hybrid port. Arcuate surface 15 comprises an arc of radius R4. Surface 15 creates a ring contact with cone 22. This creates a contact arc (circular line) which increases the contact pressure per unit area, which in turn enhances sealing. The arcuate surface 15 will mate with any tube having a cone angle α, for example as described in Figure 2(A). The port in Fig. 2B and the embodiment in Fig 2C are able to accept a SAE MALE BOSS fittings an 37 DEGREE male fitting, a 45 DEGREE male fitting and an MJX fitting with either a 45 degree cone or a 37 degree cone.

Fig. 2(C) is cross-sectional view of a hybrid port. Radius (R) allows the part to engage several different cones. Fig. 2C is an alternate embodiment to Fig. 2B. This hybrid port has a surface 150 having a radius of approximately R2.50. However, the radius could be in the range of 0.25mm up to greater than 20mm depending upon the size of the port.

Surface 12 is disposed at an angle α to a centreline A-A. Surface 12 is connected to arcuate sealing surface 150. Surface 150 comprises a radius of R2.50. Surface 150 engages a tube cone to create a seal. Surface 150 is adjacent to arcuate surface 151 and is adjacent to surface 12. Surface 151 comprises a radius of R0.50, or in other words the radius of surface 150 is approximately 5x larger than the radius of surface 151.

Fig. 2(D) is cross-sectional view of a hybrid port. Radius (R) allows the part to engage several different cones. Fig. 2D is an alternate embodiment to Fig. 2C. This hybrid port is more compact and has a shorter thread allowing it to mate with a standard SAE male 37 and a standard SAE male 45 and an MJX and a Male Boss light fitting.

Surface 12 is disposed at an angle α to a centreline A-A. Surface 12 engages an arcuate sealing surface 150. Surface 150 comprises a radius of R2.50. Surface 150 engages a tube to create a seal. Surface 150 is adjacent to arcuate surface 151 and is adjacent to surface 12. Surface 151 comprises a radius of R0.50, or in other words the radius of surface 150 is 5x larger than the radius of surface 151.

Fig. 3 is a cross-sectional view of the port in Fig. 2A with an MJX tube attached. MJX tubing on a swivel nut 20 is engaged with threaded surface 10. Surface 10 comprises a straight thread. Surface 10 may comprise either a left hand or right hand thread.

Reinforced cone 22 for tubing 21 is compressed between surface 12 and end 23 of swivel nut 20, thereby forming a metal to metal seal. Two different tube thicknesses are shown in Fig. 3, namely, 21A and 21B. Ends 22A and 22B engage surface 150. Each end 22A and 22b has a cone angle equal to α as described in Fig. 2A.

Fig. 4(A) is a cross-sectional view of the port in Fig. 2A with the SAE male boss heavy duty attached.

Fig. 4(B) is a cross-sectional view of the port in Fig. 2A with the SAE male boss light duty attached.

Fig. 5 is a cross-sectional view of the port in Fig. 2D with a male SAE 45 fitting attached. Note this hybrid port 200 will also work with a male SAE 37 fitting.

Fig. 6 is a cross-sectional view of a tubing assembly engaged with the hybrid port. The tubing and connector assembly is as described in Figure 3. Ferrule 400 is used to connect the assembly to a hose.

Assembly 500 is axially aligned along axis A-A. A bore 101 extends through the port whereby a fluid can flow through the port. Bore 101 having a diameter approximately corresponding to the diameter of tube 21.

The fluid can comprise hydraulic oil, oil, fuel, water, gases or any other fluid which is amenable to flow through tubes or hose.

The new design overcomes the problem of degradation of the SAE male boss fitting sealing capability under pressure, temperature and vibration by utilizing a metal to metal seal which has a smaller wetted sealing area than that of a male boss port.

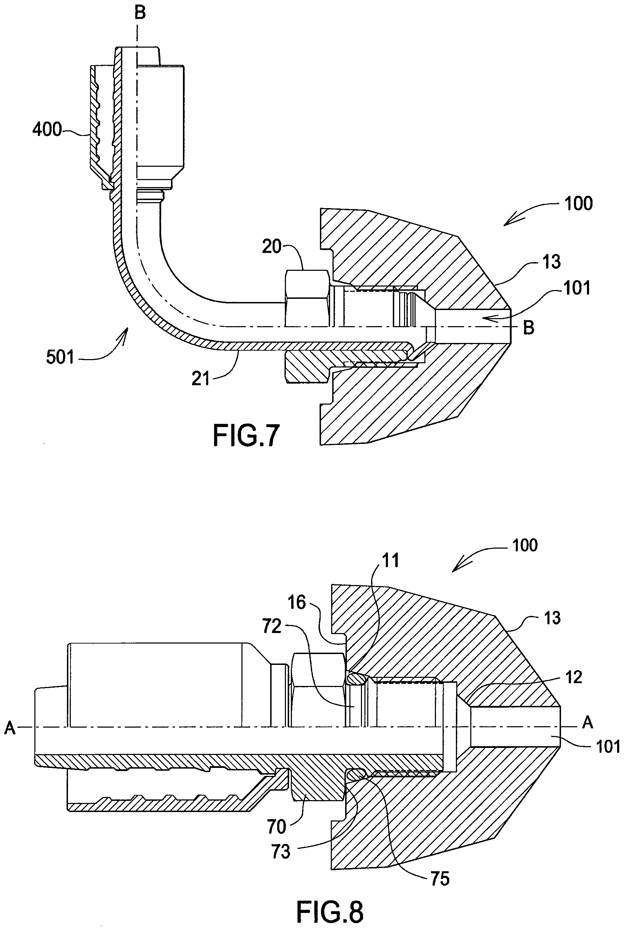

Fig. 7 is a cross-sectional view of a tubing assembly engaged with the hybrid port. The components are as described in Figure 6, with the exception that a 90° bend is present in tubing 21 along a tubing centerline B-B.

This design overcomes the problems caused by degradation of the SAE male boss adjustable fitting sealing that depend on a clinched washer to prevent the extrusion of the o-ring. The new design allows the fitting to be in the correct rotational position and tightened down resulting in a locked fitting that can simplify equipment assembly and eliminate the need for the male boss adjustable fitting

Fig. 8 is a cross-sectional view of a coupling assembly engaged with the hybrid port. An SAE MALE BOSS male connector 70 is engaged with the port 100. O-ring 75 is compressed between surface 11 and circumferential outer surface 72, thereby forming a pressure seal between the port and the connector 70. Flange surface 73 is in metal to metal contact with port surface 16 which contact determines full engagement of the connector with the port.

Connector 70 is fully compatible with the hybrid port. When used with a connector 70 surface 12 is not in contact with the connector 70.

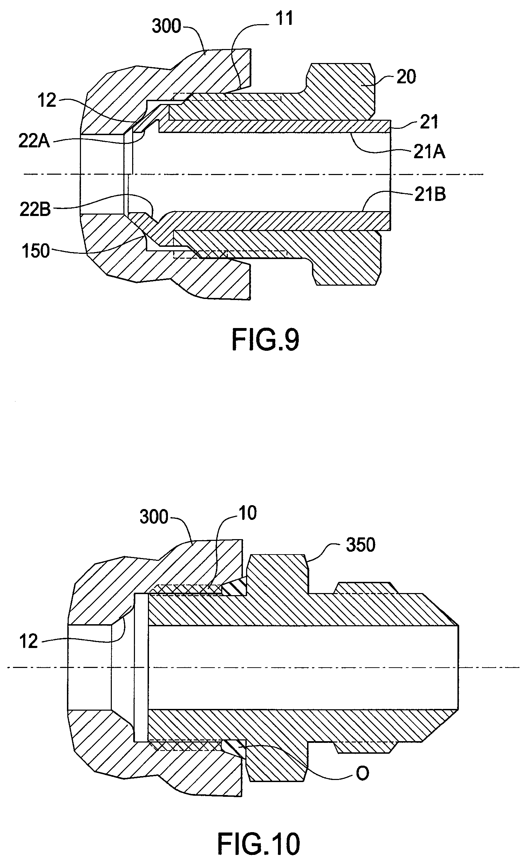

Fig. 9 is a cross-sectional view of the port in Fig. 2D with an MJX tube attached. MJX tubing on a swivel nut 20 is engaged with threaded surface 10. Surface 10 comprises a straight thread. Surface 10 may comprise either a left hand or right hand thread.

Reinforced cone 22 for tubing 21 is compressed between surface 12 and end 23 of swivel nut 20, thereby forming a metal to metal seal. Two different tube thicknesses are shown in Fig. 3, namely, 21A and 21B. Ends 22A and 22B engage surface 150.

Fig. 10 is a cross-sectional view of the port in Fig. 2D with the SAE male boss 350 light duty attached.

Although a form of the invention has been described herein, it will be obvious to those skilled in the art that variations may be made in the construction and relation of parts without departing from the scope of the invention as defined in the claims.

## Claims

1. A hybrid tube connector port comprising:
a bore having a diameter and a centerline;
first (12) and second (11) tapered surfaces for engaging different types of tube connector;
the first tapered surface (12) having a cone angle α in the range of 36.5° to 45° relative to the centerline;
the second tapered surface (11) having a cone angle β of 12° relative to the centerline;
the first tapered surface (12) being disposed immediately proximate to the bore;
a threaded inner surface (10) disposed axially between the first tapered surface and the second tapered surface (11); and
a flat surface, perpendicular to the bore centerline, disposed between the first tapered surface (12) and the threaded inner surface (10).

2. The hybrid port as in claim 1, wherein the threaded inner surface (10) comprises a straight thread.

3. The hybrid port as in claim 1 further comprising a weldment surface (13) for attaching the hybrid port to a mounting surface.

4. The hybrid port as in claim 1, wherein the second tapered surface (11) has a minimum radius which is greater than any radius of the first tapered surface (12).

5. A hybrid tube connector port for engaging different types of tube connector comprising:
a bore having a diameter and a centerline;
a first tapered surface (12) disposed immediately adjacent to the bore, having a cone angle α in the range of approximately 37° to approximately 45° relative to the centerline;
a second tapered surface (11) having a cone angle β of 12° relative to the centerline;
an arcuate sealing surface (150) disposed immediately adjacent to the first tapered surface (12); and
a threaded inner surface (10) disposed axially between the arcuate sealing surface (150) and the second tapered surface (11).

6. The hybrid port of claim 5
wherein the arcuate sealing surface (150) has a radius (R) in the range of approximately 0.25mm to approximately
20mm.

7. The hybrid port of claim 5 further comprising a second arcuate surface (151) disposed between the arcuate sealing surface (150) and the threaded inner surface (10).

8. The hybrid port as in claim 7 wherein the radius (R) of the arcuate sealing surface (150) is approximately five times larger than the radius of the second arcuate surface (151).

## Patentansprüche

1. Verbindungsanschluss für eine Röhre, umfassend:
eine Bohrung mit einem Durchmesser und einer Mittellinie;
erste (12) und zweite (11) sich verjüngende Oberflächen zum Eingreifen in unterschiedliche Typen von Röhrenverbindungsanschlüssen;
wobei die erste sich verjüngende Oberfläche (12) einen Konuswinkel α im Bereich von 36,5° bis 45° in Bezug auf die Mittellinie aufweist;
wobei die zweite sich verjüngende Oberfläche (11) einen Konuswinkel β von 12° in Bezug auf die Mittellinie aufweist;
wobei die erste sich verjüngende Oberfläche (12) unmittelbar benachbart zu der Bohrung angeordnet ist;
wobei eine innere Gewindefläche (10) axial zwischen der ersten sich verjüngenden Oberfläche und der zweiten sich verjüngenden Oberfläche (11) angeordnet ist; und
eine flache Oberfläche, die senkrecht zur Bohrungsmittellinie verläuft und zwischen der ersten sich verjüngenden Oberfläche (12) und der inneren Gewindefläche (10) angeordnet ist.

2. Hybridanschluss nach Anspruch 1, wobei die innere Gewindefläche (10) ein gerades Gewinde umfasst.

3. Hybridanschluss nach Anspruch 1, ferner umfassend eine Schweißfläche (13) zum Befestigen des Hybridanschlusses an einer Montageoberfläche.

4. Hybridanschluss nach Anspruch 1, wobei die zweite sich verjüngende Oberfläche (11) einen minimalen Radius aufweist, der größer als ein beliebiger Radius der ersten sich verjüngenden Oberfläche (12) ist.

5. Verbindungsanschluss für eine Röhre zum Eingreifen in unterschiedliche Typen von Verbindungsröhren, umfassend:
eine Bohrung mit einem Durchmesser und einer Mittellinie;
eine erste sich verjüngende Oberfläche (12), die unmittelbar benachbart zu der Bohrung angeordnet ist, die einen Konuswinkel α im Bereich von etwa 37° bis 45° in Bezug auf die Mittellinie aufweist;
eine zweite sich verjüngende Oberfläche (11), die einen Konuswinkel β von 12° in Bezug auf die Mittellinie aufweist;
eine bogenförmige Dichtfläche (150), die unmittelbar benachbart zu der ersten sich verjüngenden Oberfläche (12) angeordnet ist; und
eine innere Gewindefläche (10), die axial zwischen der bogenförmigen Dichtfläche (150) und der zweiten sich verjüngenden Oberfläche (11) angeordnet ist.

6. Hybridanschluss nach Anspruch 5, wobei die bogenförmige Dichtfläche (150) einen Radius (R) im Bereich von etwa 0,25 mm bis etwa 20 mm aufweist.

7. Hybridanschluss nach Anspruch 5, ferner umfassend eine zweite bogenförmige Oberfläche (151), die zwischen der bogenförmigen Dichtfläche (150) und der inneren Gewindefläche (10) angeordnet ist.

8. Hybridanschluss nach Anspruch 7, wobei der Radius (R) der bogenförmigen Dichtfläche (150) etwa fünf Mal größer als der Radius der zweiten bogenförmigen Oberfläche (151) ist.

## Revendications

1. Port de raccord hybride pour tuyaux, comprenant :
un alésage ayant un diamètre et un axe central ; des première (12) et deuxième (11) surfaces coniques destinées à venir en prise avec différents types de raccords de tuyaux ;
la première surface conique (12) ayant un angle de conicité α de l'ordre de 36,5° à 45° par rapport à l'axe central ;
la deuxième surface conique (11) ayant un angle de conicité β de 12° par rapport à l'axe central ;
la première surface conique (12) étant disposée immédiatement à proximité de l'alésage ;
une surface intérieure filetée (10) disposée axialement entre la première surface conique et la deuxième surface conique (11) ; et
une surface plate perpendiculaire à l'axe central de l'alésage, disposée entre la première surface conique (12) et la surface intérieure filetée (10).

2. Port hybride selon la revendication 1, dans lequel la surface intérieure filetée (10) comprend un filetage droit.

3. Port hybride selon la revendication 1, comprenant en outre une surface de soudage (13) pour attacher le port hybride à une surface de montage.

4. Port hybride selon la revendication 1, dans lequel la deuxième surface conique (11) présente un rayon minimum qui est supérieur à n'importe quel rayon de la première surface conique (12).

5. Port de raccord hybride pour tuyaux destiné à venir en prise avec différents types de raccords pour tuyaux, comprenant :
un alésage ayant un diamètre et un axe central ;
une première surface conique (12) disposée immédiatement à côté de l'alésage, ayant un angle de conicité α de l'ordre d'environ 37° à environ 45° par rapport à l'axe central ;
une deuxième surface conique (11) ayant un angle de conicité β de 12° par rapport à l'axe central ;
une surface de joint arquée (150) disposée immédiatement à côté de la première surface conique (12) ; et
une surface intérieure filetée (10) disposée axialement entre la surface de joint arquée (150) et la deuxième surface conique (11).

6. Port hybride selon la revendication 5, dans lequel la surface de joint arquée (150) présente un rayon (R) de l'ordre d'environ 0,25 mm à environ 20 mm.

7. Port hybride selon la revendication 5, comprenant en outre une deuxième surface arquée (151) disposée entre la surface de joint arquée (150) et la surface intérieure filetée (10).

8. Port hybride selon la revendication 7, dans lequel le rayon (R) de la surface de joint arquée (150) est environ cinq fois plus grand que le rayon de la deuxième surface arquée (151).
